Europäisches Patentamt

European Patent Office

Office européen des brevets

(19)

(11) Numéro de publication: **0 064 479**
**A1**

(12) **DEMANDE DE BREVET EUROPEEN**

(21) Numéro de dépôt: **82810164.2**

(22) Date de dépôt: **20.04.82**

(51) Int. Cl.³: **B 32 B 21/02**
**B 29 J 5/04**

(30) Priorité: **22.04.81 CH 2619/81**

(43) Date de publication de la demande:
**10.11.82 Bulletin 82/45**

(84) Etats contractants désignés:
**AT BE CH DE FR GB IT LI NL SE**

(71) Demandeur: **BATTELLE MEMORIAL INSTITUTE**
**7 route de Drize**
**CH-1227 Carouge/Genève(CH)**

(72) Inventeur: **Negaty-Hindi, Guy**
**103, avenue du Bois de la Chapelle**
**CH-1213 Onex(CH)**

(74) Mandataire: **Dousse, Blasco et al,**
**7, route de Drize**
**CH-1227 Carouge/Genève(CH)**

(54) **Bloc stratifié à base de matières cellulosiques et procédé pour sa fabrication.**

(57) Ce bloc se compose de couches alternées, A et B, de matières ligno-cellulosiques liées par un adhésif. Les couches A sont de texture grossière, les couches B de texture fine, le tout donnant au bloc une veinure rappelant celle du bois.

On fabrique ce bloc en empilant les couches A et B et en stratifiant le tout à chaud.

EP 0 064 479 A1

## BLOC STRATIFIE A BASE DE MATIERES CELLULOSIQUES

## ET PROCEDE POUR SA FABRICATION

La présente invention concerne le recyclage des déchets ou fragments cellulosiques et ligno-cellulosiques tels que paille, bagasse de canne à sucre, son, balle de céréales, épis décortiqués, copeaux de bois, sciure, linters, déchets végétaux en tous genres, etc.; dans ce qui suit, de telles matières de départ seront désignées par le terme général de "matières cellulosiques".

L'invention a plus particulièrement pour objet un bloc stratifié composé de couches alternées, A et B dont le nombre n'est pas inférieur à cinq, de matières cellulosiques liées par au moins un adhésif thermodurcissable. Ce bloc est caractérisé par le fait que les couches A comprennent de la matière cellulosique en fragments ou fibres grossièrement divisés, tandis que les couches B comprennent de la matière cellulosique de fine granulométrie ou finement divisée en poudre ou particules, l'alternance de ces couches grossières et fines donnant au bloc une veinure rappelant celle du bois naturel.

L'invention, qui concerne aussi la préparation du bloc ci-dessus, a été réalisée dans le cadre d'une étude sur la fabrication de panneaux laminés à chaud sous pression à partir de bagasse de canne à sucre et de colles adhésives. Lors de ce travail, on a constaté que des panneaux réalisés par pressage de cannes à sucre entières avec un adhésif hydrophobe comme liant résistaient mal à l'humidité en raison d'une imprégnation insuffisante par ledit adhésif des portions de moelle de celles-ci. De tels fragments de moelle non suffisamment imprégnés de résine gonflent en effet facilement par absorption de vapeur d'eau et, après une période de stockage en atmosphère humide, lesdits panneaux de bagasse présentaient des zones de dilatation inacceptables.

On a alors soumis les cannes à sucre désséchées à un broyage grossier dans un mixer à larges pales ce qui a permis de séparer ensuite facilement, par tamisage, les fibres de la tige et de l'écorce d'avec la pulpe et la moelle normalement renfermée dans ces fibres. On a ensuite moulu finement cette moelle et on a préparé, en mélangeant cette sorte de "farine" cellulosique avec 5 à 15% en poids de colle thermodurcissable dans un malaxeur à billes, une pâte qu'on a laminée en feuilles (B) d'environ 1-2 mm d'épaisseur de la manière suivante: sur une plaque métallique, par exemple d'acier inoxydable, on a étalé, par exemple à la spatule, une quantité appropriée de pâte dont on a régularisé approximativement la surface. Puis on a appliqué sur le tout une seconde plaque métallique qu'on a pressée régulièrement de manière à réaliser l'épaisseur voulue; puis on a laissé durcir jusqu'à obtention d'une feuille prédurcie souple mais pouvant être manipulée sans se déchirer.

On a procédé de manière similaire en mélangeant les fragments grossiers de fibre d'écorce avec 5 à 15% de la même colle que ci-dessus dans un récipient muni d'un agitateur central à vitesse très lente puis en étalant sur une surface plane le mélange d'aspect peu homogène ainsi obtenu, ce qui a fourni des feuilles (A) de texture rugueuse et grossière d'environ 1 à 5 mm d'épaisseur qu'on a laissé prédurcir jusqu'à consistance convenable.

On a alors empilé entre les machoires d'une presse chauffante un certain nombre de ces feuilles, par exemple une centaine, en alternant les couches A et B et on a pressé et chauffé le tout suivant les conditions habituelles utilisées dans la fabrication des panneaux de bois pressés, c'est-à-dire environ 60 à 150°C sous 2 à 20 kg/cm² pendant 2 à 30 minutes ce qui a fourni un bloc solide doué d'excellentes propriétés mécaniques et se laissant travailler aisément en menuiserie. On a de plus constaté, après sciage, que la tranche de ce bloc avait une veinure rappelant celle du bois en ce sens que l'alternance des couches A et B soudées les unes aux autres présente une ressemblance avec les veines produites par les cercles de croissance annuels du bois naturel. Il est évident qu'une telle ressemblance peut être plus ou moins accentuée suivant le degré de mouturage de la matière cellulosique des couches B et la régularité d'orientation des fibres des couches A.

On a constaté par la suite que cette technique générale de reconstitution de bois pouvait être appliquée à de nombreux systèmes de matières cellulosiques. Ainsi, on peut constituer les couches B à partir de matières cellulosiques de granulométrie fine ou relativement fine telles que poudre de bois, cellulose hachée, sciure, son, balle de riz, etc... et autres matières cellulosiques plus ou moins finement divisées ou pulvérisées. Pour les couches A, on peut utiliser des matières cellulosiques grossières telles que paille, tiges de canne à sucre grossièrement concassées et débarassées de leur pulpe, copeaux de bois, feuilles sèches (de préférence de grandes dimensions et à fibres résistantes comme les feuilles de bananier), écorces d'arbres hachées grossièrement, épis de maïs décortiqués et tout autres matières cellulosiques en fragments ou fibres grossières. La dimension de tels fragments peut être très variable mais sera, de préférence, comprise entre environ 1 cm et plusieurs dizaines de cm (par exemple 1 m ou plus). En ce qui concerne la matière fine des couches B, ses particules pourront avoir une dimension de l'ordre de quelques mm à quelques $\mu$. Ce qui importe, cependant, c'est que le rapport entre les dimensions moyennes des fragments des couches A et celles des particules des couches B soit d'au moins 10 et, avantageusement, de 100, 1000 ou plus.

En ce qui concerne l'état de la technique dans ce domaine, on signalera les documents suivants:

Le document FR-A 1.534.839 décrit des panneaux de bois agglomérés dont l'un se compose de trois couches superposées (voir Exemple 1, p. 2, col. 1), les couches extérieures étant formées de copeaux relativement fins et la couche intérieure de copeaux relativement grossiers. Une telle texture permet de donner au panneau un aspect extérieur "mieux fini" tout en utilisant, dans le corps du panneau, des éléments relativement grossiers et donc bon marché. Suivant l'exemple 2 de ce même brevet (p. 2, col. 2), on forme des panneaux à 5 couches, la couche centrale et les couches extérieures étant formées de copeaux liés entre-eux par un adhésif et les couches intermédiaires étant formées d'une poudre cellulosique non liée. Après pressage du tout, les couches extérieures sont séparées de la couche centrale par clivage dans le plan des couches de matière non liée, le tout résultant en l'obtention de trois panneaux indépendants, ceux-ci ayant été fabriqués en une seule opération. Il n'est pas question dans ce brevet de l'empilement successif d'un nombre de couches alternantes grossières et fines de manière à former un bloc de bois

reconstitué dont la coupe longitudinale montre, ensuite, des dessins de veinure rappelant celle du bois naturel.

Le document FR-A 2.069.610 décrit des panneaux de bois pressé formés de plusieurs couches de copeaux mélés à un adhésif. La texture des copeaux de la zone centrale diffère de celle des copeaux des zones extérieures de même que le taux de liant utilisé pour ces diverses couches. Il n'y a pas là non plus d'indications relatives à l'aspect de la tranche de tels panneaux.

Le document FR-A 2.003.620 décrit la fabrication de panneaux de bois pressés d'épaisseur relativement faible (5 à 20 mm) mais de bonne résistance à l'humidité par utilisation de quantités relativement élevées de liant thermodurcissable. Le document FR-A 1.103.226 décrit un panneau de bois aggloméré à 5 couches: une couche centrale de copeaux grossiers, deux couches intermédiaires de copeaux plus fins et deux couches d'apprêt extérieures très fines servant uniquement à former une surface extérieure lisse.

Le document FR-A 1.079.937 décrit un panneau de bois aggloméré comprenant une couche centrale de matière minérale incombustible.

Le document DE-A 1.653.221 décrit un panneau de bois pressé à cinq couches: une couche centrale épaisse de matières grossières, deux couches intermédiaires minces de matières lamellaires entassées de façon laminaire et deux couches terminales de matières très fines, les quantités d'adhésif utilisées dans ces diverses couches variant entre 2 et 11% suivant la nature des matériaux de celles-ci. Ce document ne semble pas non plus contenir d'information pouvant aller à l'encontre de la brevetabilité de l'invention.

Le document LU-A 27937 décrit un panneau de bois aggloméré composé d'une couche centrale de copeaux grossiers et de deux couches extérieures de copeaux plus fins.

En conclusion, aucune des références citées ne paraît même évoquer la possibilité de stratifier un nombre relativement élevé de couches de déchets ligno-cellulosiques de manière à former un bloc dont la tranche ressemblera à celle d'un bois naturel.

Le procédé de préparation des blocs selon l'invention est le suivant: on commence par ajouter une quantité de liant ou colle adhésive aux particules grossières destinées à constituer les couches A du stratifié de manière que celles-ci soient convenablement mouillées et adhèrent entre-elles; puis on étale ce mélange pâteux en couche et on lui fait subir un prédurcissement (par exemple en la chauffant un court moment) de manière qu'elle acquière une rigidité juste suffisante pour qu'on puisse la manipuler facilement sans qu'elle se déchire. On procède ensuite, à partir des feuilles (A) ainsi obtenues, suivant deux variantes principales. Suivant la première de ces variantes, on prépare au préalable une pâte (B) en mélangeant des particules cellulosiques de fine granulométrie à une quantité de liant ou adhésif convenable et on étale une couche de cette pâte B sur une feuille prédurcie A. On recouvre la couche de pâte B d'une nouvelle feuille A et on répète ce processus jusqu'à obtention d'un empilement comprenant le nombre voulu de couches successives. On presse alors le tout dans une presse de type habituel de façon à laminer l'assemblage en un bloc compact et à bien faire pénétrer la pâte B entre les interstices des particules grossières constituant les feuilles A de manière que les éléments successifs du bloc soient intimement liés entre eux. Le bloc est ensuite durci par chauffage dans un four suivant les conditions habituelles.

Suivant une seconde variante, on étale la pâte B en couche sur une surface appropriée et on fait subir à cette couche un traitement de prédurcissage similaire à celui utilisé pour la confection des feuilles A. On obtient ainsi des feuilles prédurcies B qu'on peut manipuler provisoirement sans qu'elles se déchirent; finalement, on empile, l'une sur l'autre alternativement, les feuilles A et les feuilles B et on presse et chauffe le tout jusqu'à durcissement complet.

De manière générale, il faut plus de colle adhésive pour lier entre elles les particules fines des couches B que pour lier entre-eux les fragments des couches A. Ainsi, pour les couches A, de 2 à 8% en poids de colle est généralement suffisant alors que pour les couches B il en faut de 5 à 25% suivant la nature des matières employées et la granulométrie de celles-ci. De toute évidence, plus cette granulométrie est fine, plus il faut mettre d'adhésif. Pour se guider dans cette fabrication, on pourra suivre les directives données dans le brevet USP 3,493,528 qui décrit la fabrication à partir de bagasse de canne à sucre, de panneaux à trois couches, B/A/B (la signification de A et B étant celle donnée aux couches grossières et fines de la présente invention). De préférence, on utilisera dans la

- 6 -                                    0064479

présente invention, environ 2 à 3 fois plus de résine pour les couches B que pour les couches A.

Les types de liants utilisables dans la présente invention sont
quelconques et peuvent être choisis, suivant les besoins du moment,
dans l'éventail considérable des liants et résines disponibles pour
cela dans le commerce. On choisira des résines plus ou moins visqueuses suivant la nature et la granulométrie des matières de départ à
employer, plus ou moins colorées suivant les résultats à obtenir et
plus ou moins tenaces en fonction des propriétés désirées pour le
produit final. On pourra d'ailleurs prévoir des charges additionnelles lorsque la fabrication des pâtes des couches suivant les propriétés particulières qu'on désire donner au bloc terminé; par exemple,
poudre de graphite, fibres de verre, talc, amiante, silicates, produits d'ignifugeage, etc...

Comme colles adhésives, on peut employer des résines telles que,
par exemple, urée-formaldéhyde, phénol-formaldéhyde (incluant des
phénols comme le bis-phénol A, le résorcinol, le catechol, etc...)
mélamine-formaldéhyde, Novolak, epoxy, polyamides, acryliques, poluréthanes, etc.., toutes colles disponibles dans le commerce et accessibles à l'homme de métier. On peut également utiliser, suivant
les propriétés qu'on désire impartir au produit de l'invention, des
liants de natures diverses tels que bitumes, colles de poisson, pâtes d'amidon, jus sucriers, mélasses, goudrons de distillation et
autres produits visqueux sans utilisation habituelle particulière.

Au point de vue des opérations successives nécessaires à la réalisation de l'invention, on peut utiliser les techniques connues de
l'homme de métier dans la fabrication des panneaux de copeaux ou particules de bois pressées. Ainsi, pour préparer les feuilles A et B,
on malaxe les fragments ou particules de matières cellulosiques avec
la proportion voulue de résine dans des malaxeurs appropriés, on étale ces mélanges en couches grâce à des machines de couchage de type habituel (en continu ou en discontinu), on soumet ces couches à
un calibrage et à un prédurcissage dans une machine convenable pour
tirer l'épaisseur et en les chauffant à température modérée jusqu'à
consistance souple, puis on superpose les couches comme indiqué plus
haut et on presse et chauffe le tout jusqu'à obtention du bloc durci recherché. On notera que, dans le but d'accroître la ressemblance entre le produit de l'invention et le bois naturel, il est avantageux de prévoir d'orienter autant que possible dans une direction commune les fibres grossières destinées à former les couches A. Ceci peut se faire, toujours suivant les moyens habituels, par défeutrage par exemple au moyen d'une machine à carder ou d'un courant d'air.

Pour la réalisation de la première variante, on peut utiliser pour l'application des couches successives de pâte B les moyens habituels connus de l'homme de métier, c'est-à-dire, par exemple on peut étaler la pâte à la spatule, au moyen d'une lame traînante ou par projection au moyen d'une machine à crépir ou, encore par le moyen d'une extrudeuse.

Suivant une modification de la seconde variante de fabrication, au lieu d'empiler l'une sur l'autre, parallèlement, un relativement grand nombre de couches A et B, on peut partir de deux rubans, A et B, fabriqués en continu, l'un (A) à partir de fragments grossiers orientés latéralement, par rapport au déplacement du ruban, et de colle qu'on ajoute soit au préalable soit par mélange, soit par pulvérisation directe sur les fragments en déplacement, l'autre (B) à partir de poudre fine et de colle, et enrouler sur lui-même le système constitué des deux rubans une fois superposés. Pour cela, on utilise une âme cylindrique tournante, de préférence en bois pour ne pas avoir à la retirer ensuite du bloc durci, actionnée par un moteur sur laquelle on enroule, par leur extrémité, les deux rubans une fois superposés. Un ou plusieurs rouleaux presseurs chauffant appliquent fortement et laminent par pression la double épaisseur du ruban sur l'âme centrale (et, bien entendu, sur la spire de ruban précédente dès que l'âme a accompli un premier tour de 360° sur elle-même), de manière que l'opération de pressage, calibrage et de durcissement s'accomplisse progressivement au fur et à mesure que le double ruban s'enroule sur lui-même. Le bloc final est donc constitué d'une succession de couches circulaires alternantes A et B empilées sous forme de spires, le tout se présentant à la manière des cercles concentriques d'un tronc d'arbre. Par la suite, le bloc, cylindrique, peut être débité en planches ou en poutres, celles-ci donnant alors l'impression d'avoir été sciées dans du bois naturel. Pour la fabrication des rubans, on peut utiliser les techniques habituelles, par exemple calandrage et couchage au moyen des machines connues dans la fabrication du papier (FOURDRINIER).

Le bois artificiel ainsi fabriqué possède des propriétés mécaniques rappelant aussi celles du bois naturel, résistance à la flexion, à la traction et souplesse générale. Il est cependant plus homogène à travailler, ne s'effrite pas et ne forme pas d'échardes lors du perçage. Il se laisse bien tarauder et les filets de vis qu'on peut y pratiquer ont une résistance souvent équivalente à ceux ménagés dans du bois dur.

Les exemples suivants illustrent l'invention :

Exemple 1

Bois artificiel à partir de bagasse de cannes à sucre

On a fendu des tiges sèches de cannes à sucre (bagasse) dans le sens de la longueur, de manière à séparer l'écorce de la matière constituant l'intérieur des tiges. On a broyé dans un moulin à couteaux cette matière interne (comprenant la pulpe, la moelle sèche et un certain pourcentage de fibres) jusqu'à consistance d'une poudre fine (B) (granulométrie environ 100-200 $\mu$). Par ailleurs, on a déchiqueté les écorces fibreuses des tiges dans un broyeur à disques jusqu'à obtention de fragments fibreux (A) de longueurs comprises entre approximativement 1 et 20 cm.

On a ensuite malaxé dans un malaxeur à billes 500 g de poudre B avec 75 g de colle BALCOTON-100 (fabriqué par Bally-CTU) jusqu'à consistance d'une pâte épaisse qu'on a étalée en une couche d'environ 1 mm d'épaisseur, au moyen d'une lame calibreuse sur une plaque d'acier inoxydable de 10 x 20 cm (couche B). On a répété cette opération de façon à obtenir environ 50 de ces couches B.

Par ailleurs, on a effectué une opération semblable en traitant 500 g de fragments (A) par 40 g de colle et on a préparé, au moyen de la pâte ainsi obtenue, une cinquantaine de plaques (A) grossières d'environ 2-3 mm d'épaisseur. Après environ 5 min à 70°C, on a pu manipuler sans grand risque de déchirure, les couches A et B, celles-ci ayant acquis, par prédurcissement, la consistance de feuilles souples.

On a empilé, en les alternant, les feuilles A et B et on a pres-

sé cet empilement dans une presse chauffante à 100° sous 5 kg/cm2 pendant 15 minutes.

Après refroidissement, on a scié le bloc obtenu dans le sens de l'épaisseur, la tranche de celui-ci présentant une alternance de veines claires et foncées donnant l'illusion d'une coupe de bois naturel. On a découpé dans ledit bloc, un échantillon de 2 x 11 cm qu'on a soumis à un test de rupture à trois points, l'effort étant appliqué transversalement par rapport à l'orientation des veines du bois artificiel. La force de rupture mesurée était de 4,126 kg/mm2; pour du bois de sapin ordinaire cette force est de l'ordre de 6 kg/mm2.

## Exemple 2

On a procédé comme pour l'Exemple 1, avec, pour les couches A, des copeaux de bois de sapin de rabotage d'épaisseur moyenne inférieure au mm et, pour les couches B, de sciure ordinaire. On a lié ces matières par une colle commerciale de type epoxy à deux composants (un adhésif et un durcisseur) à ajouter en petite quantité juste avant le pressage préliminaire en feuilles souples. Les quantités utilisées de colle étaient, approximativement, comme dans l'Exemple 1. On a obtenu, par ce moyen, des blocs stratifiés de structure veinée plus grossière que dans le cas de l'Exemple 1, mais dont la tenue mécanique était satisfaisante.

## Exemple 3

On fabrique en continu deux rubans de matière végétale à partir, d'une part, de paille de blé (A) distribuée par une trémie sur le plan supérieur d'une première grille porteuse sans fin, cette trémie orientant cette paille perpendiculairement au trajet de son déplacement et, d'autre part (B), à partir de balle de céréales déposée identiquement sur une seconde grille mobile se déplaçant, horizontalement, à la rencontre de la première grille. Les matières cellulosiques, une fois déposées sur leur grille mobile respective, sont soumises à une vibration communiquée par celle-ci (environ 30 cycles pour la paille et 120 cycles pour la balle) de manière à en homogénéiser la distribution et l'épaisseur par unité de surface. Après quoi, les couches pulvérulentes sont aspergées, toujours sous vibration, d'un adhésif commercial mélamine-formaldéhyde (10% en poids pour chaque ruban) dilué dans de l'acétone (70 : 30). Le ruban imprégné passe ensuite entre les rouleaux, chauffés à 80-100°C, d'une machine d'épaisseur, ce traitement ayant pour effet de volatiliser le solvant et de prédurcir les rubans au point de leur donner une souplesse et une maniabilité suffisante. Une âme tournante de 5 cm de diamètre en bois a été disposée, horizontalement, au lieu de convergence théorique des rubans A et B, c'est-à-dire approximativement au centre de la zone délimitée par les rouleaux d'extrémités sur lesquels se rejoignent les plans inférieurs et supérieurs des grilles transporteuses. L'amorce du ruban A a été fixée à la partie supérieure de la périphérie de l'âme tournante et l'amorce du ruban B à la partie inférieure correspondante. L'âme entrant en rotation en sens des aiguilles d'une montre, les rubans s'enroulent symétriquement de part et d'autre de l'âme et leurs spires se superposent alternativement. Un rouleau supérieur et un rouleau inférieur, tous deux chauffants (temp. environ 120°C), sont appliqués contre l'âme, parallèlement à celle-ci, avec une force approximativement constante de l'ordre d'environ 1 kg/cm$^2$, de manière à progressivement stratifier les couches successives de rubans au fur et à mesure de leur enroulement et de fournir la chaleur nécessaire au durcissement définitif de la masse. On poursuit ainsi l'enroulement jusqu'à un diamètre global d'environ 60-80 cm, après quoi on laisse reposer jusqu'à refroidissement et on débite la bille ainsi obtenue en panneaux d'environ 25 mm d'épaisseur. Ces panneaux ressemblent à du bois de texture grossière mais de grande résistance mécanique.

Exemple 4

On a réalisé une pâte relativement fluide (B) en mélangeant de la poussière de ponçage de bois de sapin avec 20% en poids d'une solution (1:1) d'un adhésif thermodurcissable commercial mélamine-formaldéhyde dans le toluène. Par ailleurs, au moyen de fragments grossiers de bois de sapin obtenus en déchiquetant des déchets de sciage dans une broyeuse à marteaux et colorés en brun au moyen d'un pigment ligneux naturel, on a réalisé des feuilles prédurcies (A) d'environ 0,5 cm d'épaisseur suivant la méthode décrite à l'Exemple 2.

On a placé une première feuille A de 100 x 30 cm dans le fond d'un moule rectangulaire (100 x 30 x 40 cm) déplaçable horizontalement (par le biais de rouleaux). Puis on a placé la pâte B dans l'entonnoir d'une extrudeuse verticale munie d'une buse d'extrusion en fente d'environ 30 cm de long et par le moyen de cette extrudeuse on a recouvert la feuille A, en la déplaçant horizontalement normalement en regard de ladite fente, d'une couche de pâte B d'environ 8 à 10 mm d'épaisseur. On a disposé sur la couche de pâte une nouvelle feuille A et on a répété ce processus jusqu'à remplissage du moule par un empilement de couches d'une hauteur totale de 40 cm approximativement (environ 30 paires de couches).

On a pressé l'assemblage ainsi formé dans une presse à froid et réalisé ainsi un bloc d'environ 10 à 15 cm de hauteur, une partie de la pâte B ayant été forcée par le pressage dans les pores et interstices de la matière grossière constituant les couches A. On a démoulé ce bloc et on l'a placé 1 - 11/2 h dans un four à 105°C pour réaliser son durcissement. On a ensuite scié le bloc dans le sens de la hauteur en éléments de 2,5 cm d'épaisseur, 1 m de long et environ 13 à 15 cm de large et, après polissage, on a obtenu des planches dont la veinure constituée de dessins alternés clairs et foncés était d'un aspect très attrayant.

REVENDICATIONS

1. Bloc stratifié composé de couches alternées, A et B dont le nombre total n'est pas inférieur à 5, de matières cellulosiques liées par au moins un adhésif thermodurcissable, caractérisé par le fait que les couches A comprennent de la matière cellulosique en fragments ou fibres grossièrement divisés, tandis que les couches B comprennent une matière cellulosique de fine granulométrie ou finement divisée en poudre ou particules, l'alternance de ces couches grossières et fines donnant au bloc une veinure rappelant celle du bois naturel.

2. Bloc suivant la revendication 1, caractérisé par le fait que le rapport entre les dimensions moyennes des fragments de la couche A et celle des particules de la couche B est d'au moins 10.

3. Bloc suivant la revendication 1, caractérisé par le fait que les fibres contenues dans la couche A sont grossièrement orientées dans une direction commune.

4. Bloc suivant la revendication 1, caractérisé par le fait que, outre l'adhésif, les constituants de la couche A sont choisis parmi des morceaux d'écorce, des copeaux de bois, de la paille de céréales, des fibres de tiges de canne à sucre (bagasse), des fibres de cellulose ou autres déchets végétaux.

5. Bloc suivant la revendication 1, caractérisé par le fait que, outre l'adhésif, les constituants de la couche B sont choisis parmi la sciure de bois, la pulpe et moelle de bagasse pulvérisée, le son, la balle de céréales, la paille finement hachée et autres déchets végétaux finement broyés.

6. Procédé pour préparer le bloc de la revendication 1, caractérisé par le fait qu'on sélectionne, d'une part une matière cellulosique en fragments ou fibres grossièrement divisés, et d'autre part, une matière cellulosique de texture finement broyée ou pulvérisée; on ajoute à la matière cellulosique grossière une résine adhésive thermodurcissable de manière à constituer une pâte grossière qu'on étale en couche mince et laisse prédurcir jusqu'à formation d'une feuille A de texture grossière et de consistance souple;

on procède de même au moyen de la matière cellulosique fine de manière à former une feuille B de texture fine et de consistance souple;

on superpose alternativement des feuilles A et B jusqu'à formation d'un empilement de hauteur désirée;

et on soumet cet empilement à chaleur et pression jusqu'à stratification et durcissement complet du bloc.

7. Procédé suivant la revendication 6, caractérisé par le fait qu'à la place d'intercaler entre chaque feuille A une feuille B à l'état prédurci, on applique une couche de la pâte formée de liant et des particules fines dont la feuille B est issue, cette pâte, lors du moulage du bloc, s'infiltrant par pression dans les interstices existant entre les particules grossières dont les couches A sont formées.

8. Procédé suivant la revendication 6, caractérisé par le fait qu'on utilise de 2 à 8% en poids d'adhésif liquide pour former la couche A et d'environ 5 à 25% en poids pour former la couche B.

9. Procédé suivant la revendication 1, caractérisé par le fait que la superposition alternative de couches A et B s'obtient en enroulant ensemble sur eux-même en spires successives un ruban formé d'une couche A et un ruban formé d'une couche B.

10. Procédé suivant la revendication 9, caractérisé par le fait que les couches A et B sont obtenues, en continu, à partir des pâtes correspondantes au moyen d'une machine de couchage.

11. Utilisation du bloc suivant la revendication 1 pour la fabrication de bois de menuiserie caractérisée par le fait qu'on scie ou découpe celui-ci dans le sens de son épaisseur, la surface des coupes ainsi obtenues ayant une apparence de bois naturel.

# 0064479

**RAPPORT DE RECHERCHE EUROPEENNE**

Office européen
des brevets

Numéro de la demande

EP 82 81 0164

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-1 534 839 (M.F.ROUGIER et al.) *En entier* | 1,4,5, 6,8 | B 32 B 21/02 B 29 J 5/04 |
| A | FR-A-2 069 610 (FAHRNI) | | |
| A | FR-A-2 003 620 (ICET) | | |
| A | FR-A-1 103 226 (ETS ROUGIER et FILS) | | |
| A | FR-A-1 079 937 (FAHRNI) | | |
| A | DE-A-1 653 221 (HIMMELHEBER et al.) | | |
| A | LU-A- 27 937 (FAHRNI) | | |

**DOMAINES TECHNIQUES RECHERCHES (Int. Cl. ³)**

B 29 J
B 32 B
C 08 J

Le présent rapport de recherche a été établi pour toutes les revendications

| Lieu de la recherche LA HAYE | Date d'achèvement de la recherche 23-08-1982 | Examinateur VAN THIELEN J.B. |
|---|---|---|